# EUROPEAN PATENT APPLICATION

(11) **EP 4 239 745 A1**
(43) Date of publication of application: **06.09.2023**
(21) Application number: 22716303.7
(22) Date of filing: 06.04.2022
(51) Int. Cl.: H01M 10/0567, H01M 4/525

(54) **LITHIUM ION BATTERY**

(30) Priority: 19.01.2022 CN 202210057979
(71) Applicant: Shenzhen Capchem Technology Co., Ltd., Shenzhen, Guangdong 518118 (CN)
(72) Inventor: QIAN, Yunxian, Shenzhen, Guangdong 518118 (CN); HU, Shiguang, Shenzhen, Guangdong 518118 (CN); DENG, Yonghong, Shenzhen, Guangdong 518118 (CN); LI, Hongmei, Shenzhen, Guangdong 518118 (CN); XIANG, Xiaoxia, Shenzhen, Guangdong 518118 (CN)
(74) Representative: De Arpe Tejero, Manuel
(86) International application number: PCT/CN2022/085251
(87) International publication number: WO 2023/137878

(57) **Abstract**

To overcome the problem of insufficient cycle performance of the existing high-voltage lithium ion batteries, the present application provides a lithium ion battery, comprising a positive electrode containing a positive electrode material layer, a negative electrode and a non-aqueous electrolyte, the positive electrode material layer comprises a positive electrode active material, the positive electrode active material comprises LiₓNi_{y}Co_{z}M_{1-y-z}O₂, M is at least one element selected from Mn and Al, the positive electrode active material is doped or coated with an element E, the element E is selected from one or more of Ba, Zn, Ti, Mg, Zr, W, Y, Si, Sn, B, Co, and P, a potential range of the positive electrode active material with respect to lithium metal is ≥ 4.25V;
the non-aqueous electrolyte comprises a solvent, an electrolyte salt and an additive, the additive comprises a compound represented by structural formula 1: 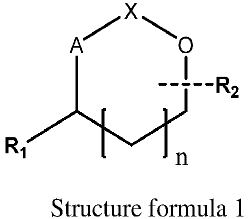 the lithium ion battery meets the following requirements:
0.1≤(H/T)×M/1000≤10; and
80≤H≤150, 0.005≤T≤0.8, 0.05≤M≤3. The lithium ion battery provided by the present application has a lower battery impedance and excellent high-temperature cycle performance.

## Description

### Technical field

The present application belongs to the technical field of energy storage battery devices, in particular to a lithium ion battery.

### Background

Since the first commercialization of lithium ion batteries (LIBs) in 1991, lithium ion batteries have quickly occupied the mainstream market and become a part of social life, which is greatly connected with our life. With the development of lithium ion battery technology and the pursuit of high energy density, an important positive electrode active material for lithium ion battery-layered lithium-nickel-based oxide material has been developed. The layered lithium-nickel-based material has the advantages of high energy density and good low temperature performance, which is a kind of positive electrode material widely used at present. At present, the further improvement of layered lithium-nickel-based material capacity can be achieved by increasing the working voltage (4.25 V vs above Li⁺/Li ), however the increase of working voltage usually leads to damage of structure of the layered oxide material, causing the dissolution of metal ions, leading to the continuous attenuation of battery cycle life and gas expansion, affecting the safety performance of high-voltage battery.

Meanwhile, increasing the working voltage would lead to the oxidation and decomposition of the electrolyte at high voltage, resulting in the continuous deterioration of the battery cycle performance, and limiting the development of the high-voltage lithium ion batteries. To improve the adaptability of lithium ion battery electrolyte at high voltage working conditions, the most simple and effective way is to develop an additive of high-voltage resistance. It can form a stable and compact interface film at high voltage on the surface of the positive electrode material, which can effectively inhibit the oxidative decomposition of the electrolyte, thus improving the safety performance and cycle performance of the lithium ion battery at high voltage. In addition, by providing coated or doped elements in the positive electrode material, the structure of the layered lithium-nickel-based oxide material can be effectively passived, the oxidation decomposition of the electrolyte on the surface of the positive electrode material can be inhibited, the residual alkali on the surface of the active material can be reduced, and the structural damage and gas expansion can be improved. However, it has been reported that the existing high-voltage electrolyte additives can not achieve good cooperation with the coating and/or doping elements interface of the positive electrode material, resulting in the formation of an interface film which increases the electrode interface impedance. Therefore, the development of electrolyte additives with good cooperation with the positive electrode material and low impedance is crucial to the development of high-voltage lithium ion batteries.

### Summary

To solve the problem of insufficient cycle performance of the existing high-voltage lithium ion battery, the present application provides a lithium ion battery.

The technical solutions adopted by the present application to solve the above technical problem are as follows:
The present application provides a lithium ion battery, including a positive electrode containing a positive electrode material layer, a negative electrode and a non-aqueous electrolyte, the positive electrode material layer includes a positive electrode active material, the positive electrode active material includes LiₓNi_{y}Co_{z}M_{1-y-z}O₂, and 0.9<x<1.2, 0.5≤y≤1, 0≤z≤0.5, 0≤1-y-z≤0.5, M is at least one element selected from Mn and Al, the positive electrode active material is doped or coated with an element E, the element E is selected from one or more of Ba, Zn, Ti, Mg, Zr, W, Y, Si, Sn, B, Co, and P, and potential range of the positive electrode active material with respect to lithium metal is ≥ 4.25V;
the non-aqueous electrolyte includes a solvent, an electrolyte salt and an additive, the additive includes a compound represented by structural formula 1: 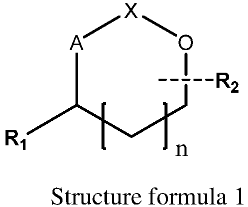
wherein n is 0 or 1, A is selected from C or O, X is selected from 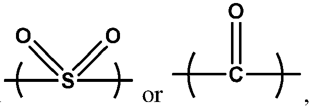 R₁ and R₂ are each independently selected from H, 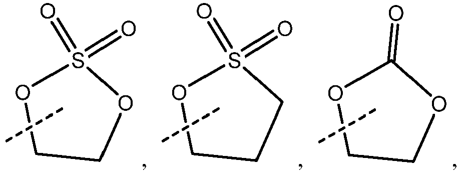 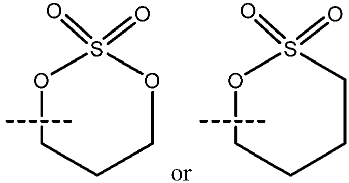 , R₁ and R₂ are not both selected from H, and X, R₁ and R₂ contain at least one sulfur atom;
the lithium ion battery meets the following requirements:
   0.1≤(H/T)×M/1000≤10; and
   80≤H≤150, 0.005≤T≤0.8, 0.05≤M≤3;
   wherein H is a thickness of the positive electrode material layer, in µm;
   T is a percentage mass content of the element E in the positive electrode material layer, in %;
   M is a percentage mass content of the compound represented by structure formula 1 in the non-aqueous electrolyte, in %.

Optionally, the potential range of the positive electrode active material with respect to lithium metal is 4.25V~4.6V.

Optionally, the lithium ion battery meets the following requirements:
0.5≤(H/T)×M/1000≤6.

Optionally, the thickness H of the positive electrode material layer is 90~120 µm.

Optionally, the percentage mass mass content T of the element E in the positive electrode material layer is 0.01%~0.2%

Optionally, the percentage mass content M of the compound represented by structural formula 1 in the non-aqueous electrolyte is 0.1%-1%.

Optionally, the compound represented by structural formula 1 is selected from one or more of the following compounds 1-22:

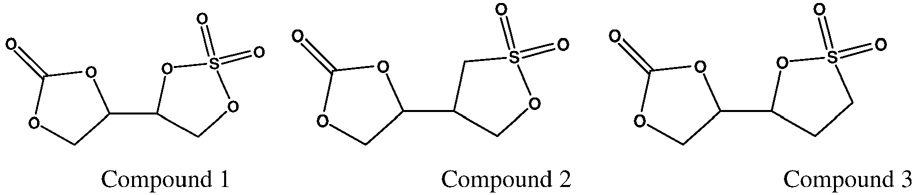

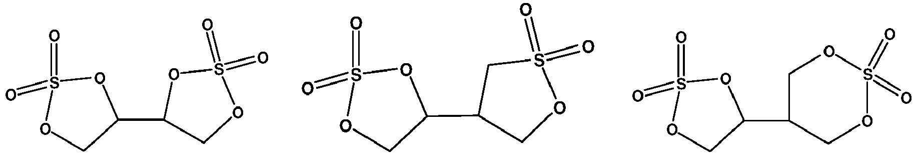

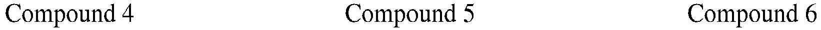

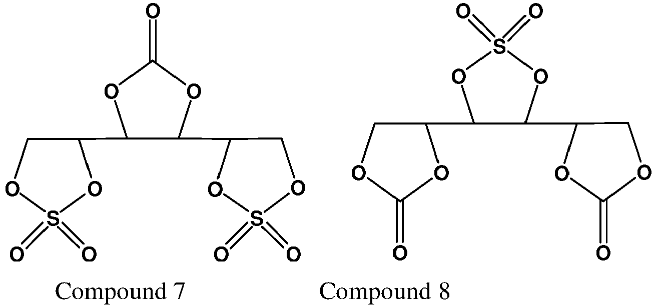

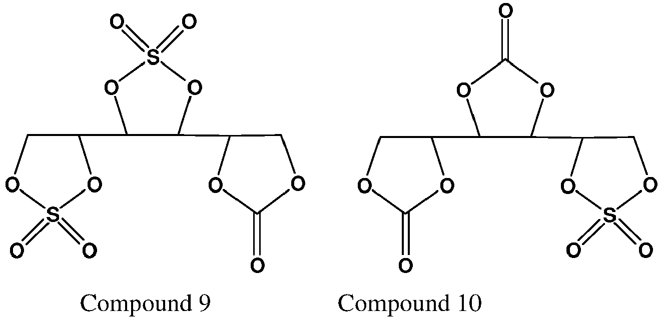

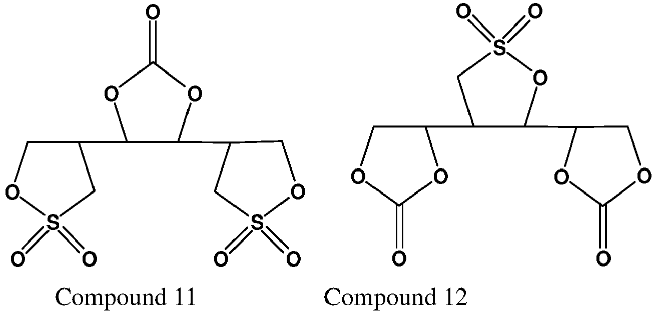

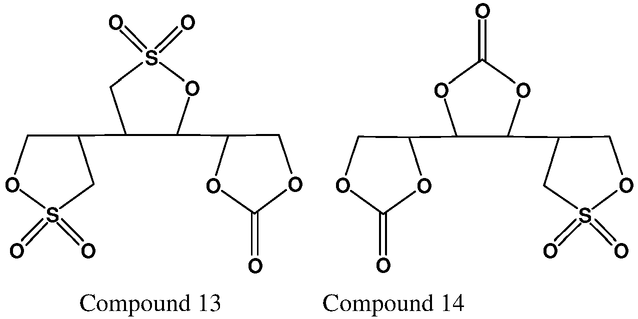

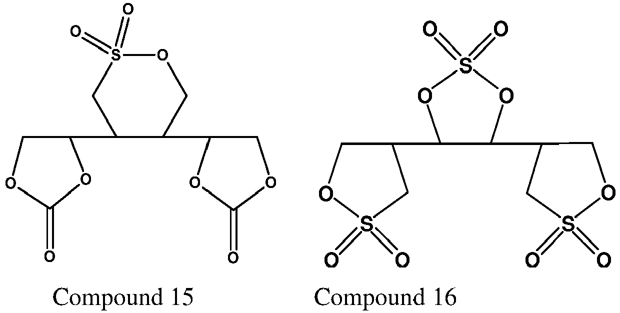

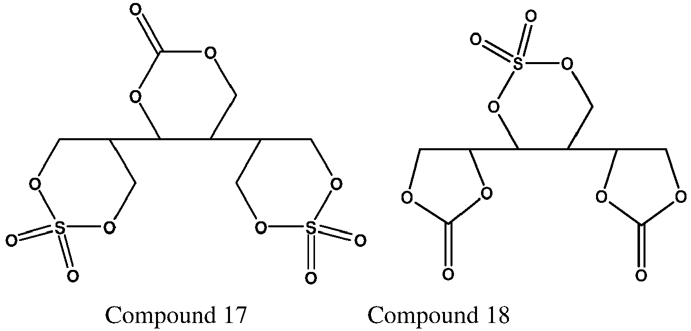

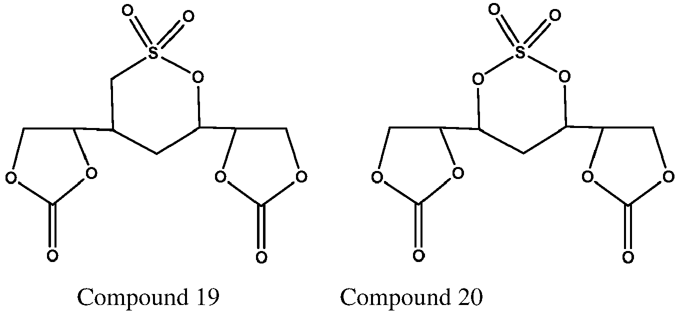

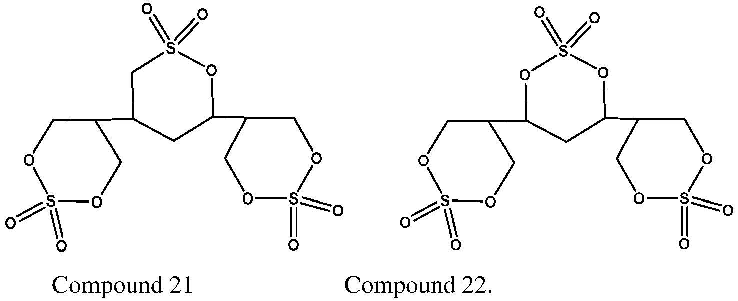

Optionally, the electrolyte salt is selected from at least one of LiPF₆, LiBOB, LiDFOB, LiDFOP, LiPO₂F₂, LiBF₄, LiSbF₆, LiAsF₆, LiN(SO₂CF₃)₂, LiN(SO₂C₂F₅)₂, LiC(SO₂CF₃)₃, LiN(SO₂F)₂, LiClO₄, LiAlCl₄, LiCF₃SO₃, Li₂B₁₀Cl₁₀ and lithium salt of lower aliphatic carboxylic acid.

Optionally, the non-aqueous electrolyte further includes a supplemental additive, the supplemental additive includes at least one of cyclic sulfuric acid ester compound, sultone compound, cyclic carbonate ester compound, phosphate ester compound, borate ester compound, and nitrile compound.

Optionally, an addition amount of the supplemental additive is 0.01%-30% based on the total mass of the non-aqueous electrolyte being 100%.

Optionally, the cyclic sulfuric acid ester compound is selected from at least one of ethylene sulfate, propylene sulfate, or methyl ethylene sulfate;
the sultone compound is selected from at least one of methylmethylene disulfonate, 1,3-propanesultone, 1,4-butane sultone, or 1,3-propylene sultone;
the cyclic carbonate ester compound is selected from at least one of vinylethylene carbonate, fluoroethylene carbonate or a compound represented by structure formula 2, 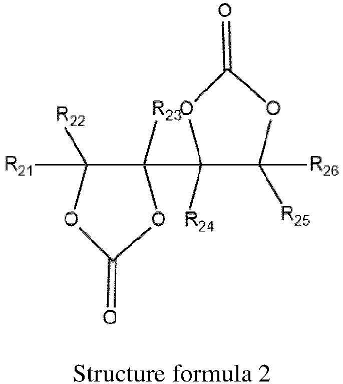
in structural formula 2, R₂₁, R₂₂, R₂₃, R₂₄, R₂₅ and R₂₆ are each independently selected from one of a hydrogen atom, a halogen atom and a C1-C5 group;
the phosphate ester compound is selected from at least one of tris (trimethylsilyl) phosphate and a compound represented by structural formula 3: 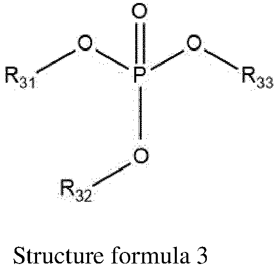
in structural formula 3, R₃₁, R₃₂ and R₃₂ are each independently selected from a C1-C5 saturated hydrocarbon group, a C1-C5 unsaturated hydrocarbon group, a C1-C5 halogenated hydrocarbon group and -Si(CₘH₂ₘ₊₁)₃, m is a natural number of 1~3, and at least one of R₃₁, R₃₂ and R₃₃ is an unsaturated hydrocarbon group;
the borate ester compound is selected from tris (trimethylsilyl) borate;
the nitrile compound is selected from one or more of butanedinitrile, glutaronitrile, ethylene glycol bis (propionitrile) rther, hexanetricarbonitrile, adiponitrile, pimelic dinitrile, hexamethylene dicyanide, azelaic dinitrile and sebacic dinitrile.

According to the lithium ion battery provided by the present application, the compound represented by structural formula 1 is added in the non-aqueous electrolyte as an additive, and meanwhile, the positive electrode active material is doped or coated with an element E. The interface film formed on the surface of the positive electrode material layer by the compound represented by structural formula 1 has a good combination effect with the positive electrode active material doped or coated with element E, thereby effectively improving the compactness and stability of the interface film and improving the high-temperature cycle stability of the lithium ion battery. Based on the relationship among the compound represented by structural formula 1, the element E in the positive electrode active material and the interface film, the inventor found through a large number of studies that when "the thickness H of the positive electrode material layer", "the percentage mass mass content T of the element E in the positive electrode material layer", and "the percentage mass content M of the compound represented by structural formula 1 in the non-aqueous electrolyte" are reasonably regulated to be in a proper range, which meets the relational expression of 0.1≤(H/T)×M/1000≤10, the synergistic effect between the compound represented by structural formula 1 and the element E can be given full play, the battery impedance is reduced, and the high-temperature cycle performance of the battery is improved.

### Detailed description of disclosed embodiments

In order to make the to-be-solved technical problems, technical solutions and beneficial effects of the present application clearer, the present application will be described in further detail below with reference to embodiments. It should be understood that the specific embodiments described herein are only for the purpose of explaining the present application and are not intended to limit the present application.

An embodiment of the present application provides a lithium ion battery, including a positive electrode containing a positive electrode material layer, a negative electrode and a non-aqueous electrolyte, the positive electrode material layer includes a positive electrode active material, the positive electrode active material includes LiₓNi_{y}Co_{z}M_{1-y-z}O₂, and 0.9≤x≤1.2, 0.5≤y≤1, 0≤z≤0.5, 0≤1-y-z≤0.5, M is at least one element selected from Mn and Al, the positive electrode active material is doped or coated with an element E, the element E is selected from one or more of Ba, Zn, Ti, Mg, Zr, W, Y, Si, Sn, B, Co, and P, and potential range of the positive electrode active material with respect to lithium metal is ≥ 4.25V;
the non-aqueous electrolyte includes a solvent, an electrolyte salt and an additive, the additive includes a compound represented by structural formula 1: 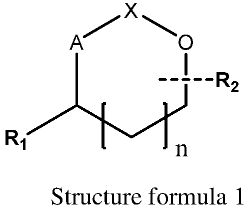
wherein n is 0 or 1, A is selected from C or O, X is selected from 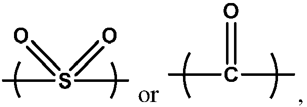 R₁ and R₂ are each independently selected from H, 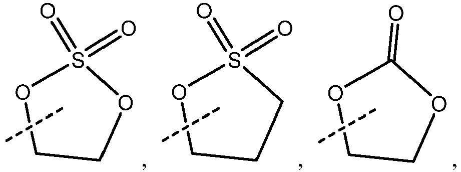 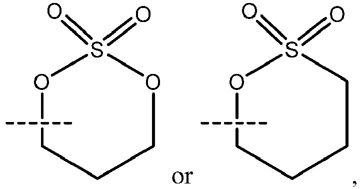 R₁ and R₂ are not both selected from H, and X, R₁ and R₂ contain at least one sulfur atom;
the lithium ion battery meets the following requirements:
   0.1≤(H/T)×M/1000≤10; and
   80≤H≤150, 0.005≤T≤0.8, 0.05≤M≤3;
   wherein H is a thickness of the positive electrode material layer, in µm;
   T is a percentage mass content of the element E in the positive electrode material layer, in %;
   M is a percentage mass content of the compound represented by structure formula 1 in the non-aqueous electrolyte, in %.

According to the lithium ion battery provided by the present application, the compound represented by structural formula 1 is added in the non-aqueous electrolyte as an additive, and meanwhile, the positive electrode active material is doped or coated with an element E. The interface film formed on the surface of the positive electrode material layer by the compound represented by structural formula 1 has a good combination effect with the positive electrode active material doped or coated with element E, thereby effectively improving the compactness and stability of the interface film and improving the high-temperature cycle stability of the lithium ion battery. Based on the relationship among the compound represented by structural formula 1, the element E in the positive electrode active material and the interface film, the inventor found through a large number of studies that when "the thickness H of the positive electrode material layer", "the percentage mass mass content T of the element E in the positive electrode material layer", and "the percentage mass content M of the compound represented by structural formula 1 in the non-aqueous electrolyte" are reasonably regulated to be in a proper range, which meets the relational expression of 0.1≤(H/T)×M/1000≤10, the synergistic effect between the compound represented by structural formula 1 and the element E can be given full play, the battery impedance is reduced, and the high-temperature cycle performance of the battery is improved.

In some embodiments, when n is 0, the compound represented by structure formula 1 is: 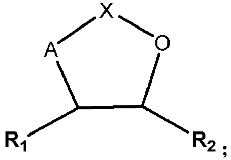 wherein A is selected from C or O, X is selected from 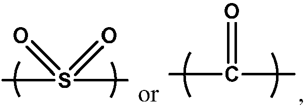 R₁ and R₂ are each independently selected from H, 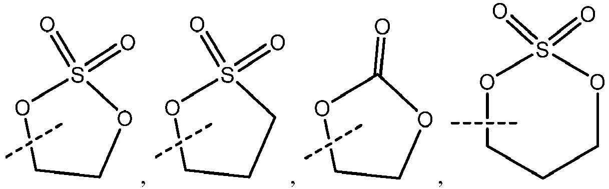 or 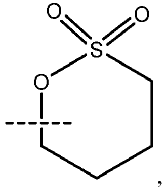 R₁ and R₂ are not both selected from H, and X, R₁ and R₂ contain at least one sulfur atom.

In some embodiments, when n is 1, the compound represented by structure formula 1 is: 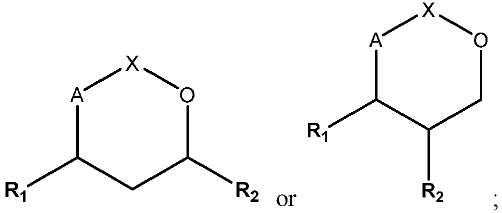 wherein A is selected from C or O, X is selected from 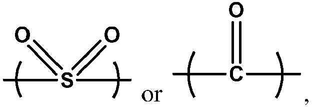 R₁ and R₂ are each independently selected from H, 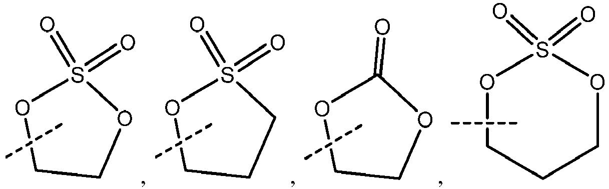 or 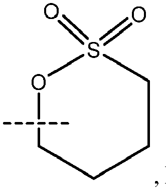 R₁ and R₂ are not both selected from H, and X, R₁ and R₂ contain at least one sulfur atom.

In a preferred embodiment, the potential range of the positive electrode active material with respect to lithium metal is 4.25V~4.6V.

In a preferred embodiment, the lithium ion battery meets the following requirements: 0.5≤(H/T)×M/1000≤6.

On the basis of 0.1≤(H/T)×M/1000≤10, 0.5≤(H/T)×M/1000≤6 is further preferred, which comprehensively considers the influence of "the thickness H of the positive electrode material layer", "the percentage mass mass content T of the element E in the positive electrode material layer", and "the percentage mass content M of the compound represented by structural formula 1 in the non-aqueous electrolyte" on high-temperature cycle performance of battery, so that the battery has longer high-temperature service life and lower impedance.

Specifically, the thickness H of the positive electrode material layer may be selected from 80µm, 85µm, 90µm, 95µm, 100µm, 105µm, 110µm, 115µm, 120µm, 125µm, 130µm, 135µm, 140µm, 145µm or 150µm.

In a preferred embodiment, the thickness H of the positive electrode material layer is 90~120 µm.

The thickness of the positive electrode material layer is also the key technical parameter in the design and preparation of lithium ion battery. Under the condition of the same size of electrodes, the larger the thickness of the positive electrode material layer is, the higher the energy density of the battery will be, but the internal impedance will also increase correspondingly. However, when the thickness of the positive electrode material layer decreases, the energy density of the battery will decrease, which is unfavorable for commercial application. When the thickness H of the positive electrode material layer is in the above range, the battery has higher energy density and lower impedance.

Specifically, the percentage mass mass content T of the element E in the positive electrode material layer may be selected from 0.005%, 0.01%, 0.015%, 0.02%, 0.05%, 0.08%, 0.1%, 0.15%, 0.2%, 0.25%, 0.3%, 0.35%, 0.4%, 0.45%, 0.5%, 0.55%, 0.6%, 0.65%, 0.7%, 0.75% or 0.8%.

In a preferred embodiment, the percentage mass mass content T of the element E in the positive electrode material layer is 0.01%~0.2%

When it is processed with doping, the element E is intercalated in the lattice of the positive electrode active material, replacing the position of cobalt, nickel, manganese or aluminum, forming a stable doping state, inhibiting the dissolution of metal ions. When it is processed with coating, the element is E coated on the outer surface of the positive electrode active material in the form of oxide or metal salt, avoiding direct contact between the positive electrode active material and non-aqueous electrolyte, and reducing the amount of residual alkali on the surface of the positive electrode material, improving the problems of structural damage and gas generation caused by the positive electrode active material under high voltage working conditions, thus improving the cycle and safety performance of battery at high voltage.

Specifically, the percentage mass content M of the compound represented by structural formula 1 in the non-aqueous electrolyte may be selected from 0.05%, 0.08%, 0.1%, 0.2%, 0.4%, 0.6%, 0.8%, 1%, 1.1%, 1.3%, 1.5%, 1.8%, 2%, 2.1%, 2.3%, 2.5%, 2.8% or 3%.

In a preferred embodiment, the percentage mass content M of the compound represented by structural formula 1 in the non-aqueous electrolyte is 0.1%-1%.

By adding the compound represented by structural formula 1 to the non-aqueous electrolyte, a stable and compact interface film can be formed on the surface of the positive electrode active material at high voltage, which effectively suppresses the oxidation and decomposition of the electrolyte and improves the electrochemical properties of the high-voltage battery. When the percentage mass content M of the compound represented by structure formula 1 is too small, it is difficult to improve the performance of the interface film; when the percentage mass content M of the compound represented by structure formula 1 is too large, the viscosity of the non-aqueous electrolyte would increase, which affects the ion transmission, and can easily produce excessive byproducts in the process of battery cycle, thus affecting the stability of the non-aqueous electrolyte.

In some embodiments, the compound represented by structural formula 1 is selected from one or more of the following compounds 1-22:

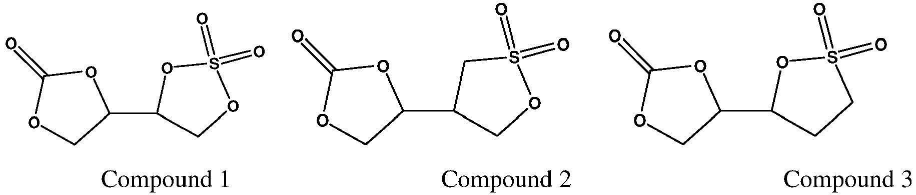

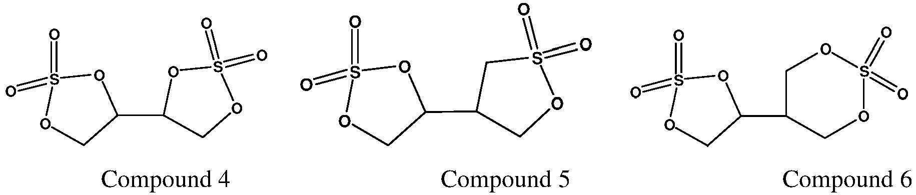

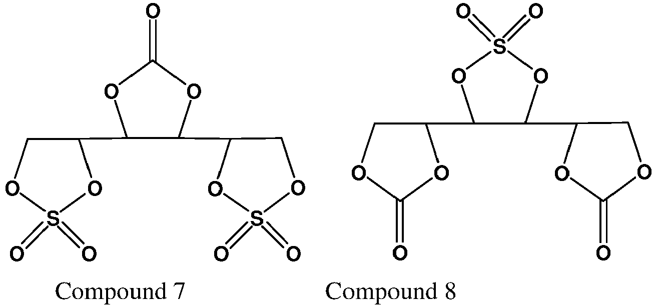

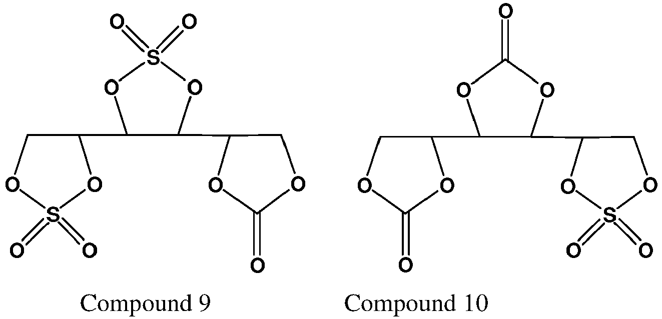

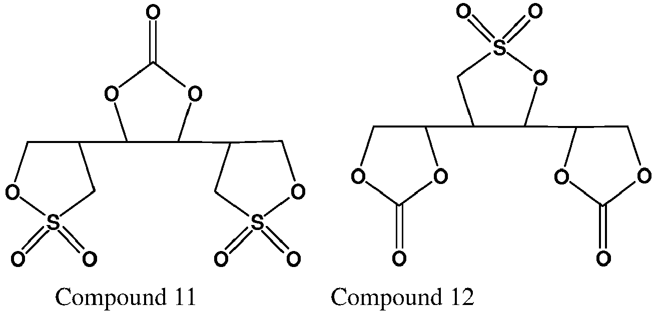

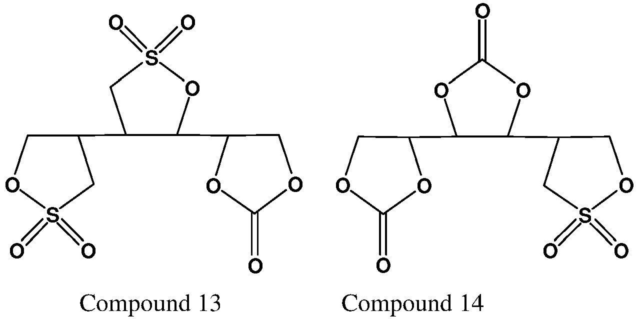

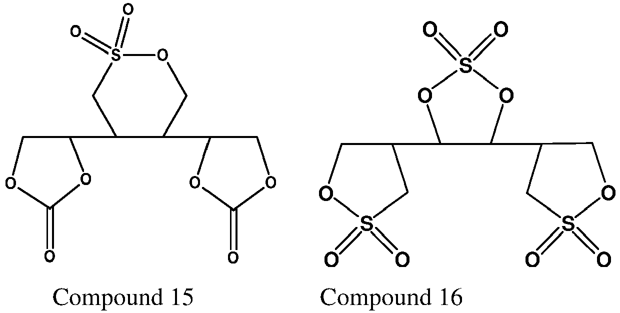

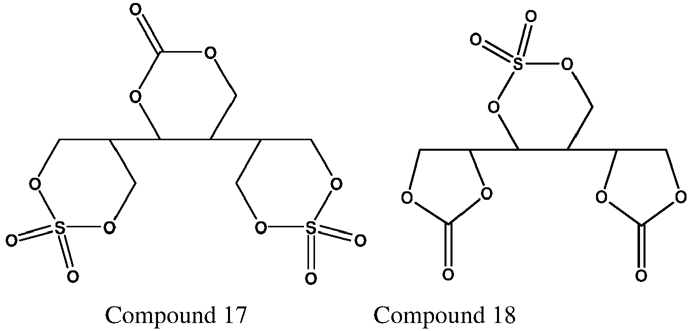

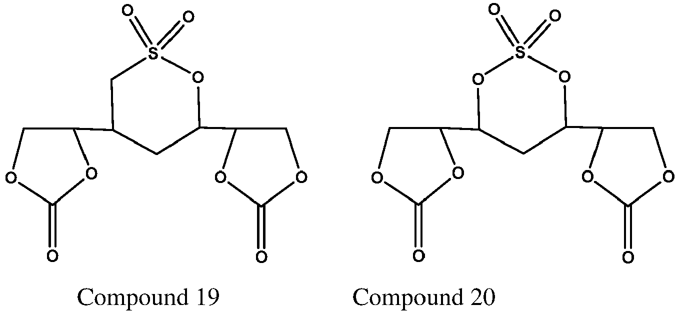

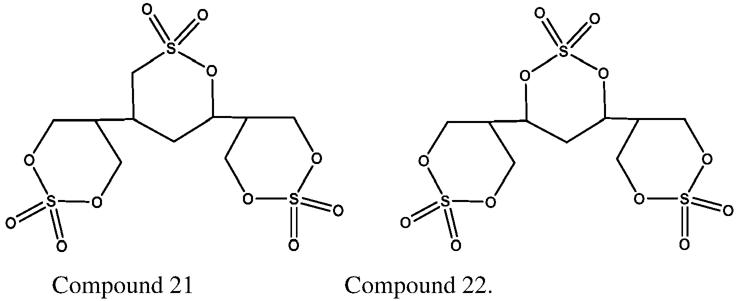

It should be noted that the above are only preferred compounds of the application, and not intended to limit the application.

Those skilled in the art, knowing the structural formula of the compound of structural formula 1, can know the preparation method of the above compounds according to the common knowledge in the technical field of chemical synthesis. For example, Compound 7 can be prepared by the following method.

Putting organic solvents such as sorbitol, dimethyl carbonate, methanol alkaline substance catalyst potassium hydroxide, DMF and the like into a reaction container, after reaction for several hours under heating conditions, adjusting the pH to be neutral by adding a certain amount of oxalic acid, filtering and recrystallizing to obtain an intermediate product 1, then performing esterification reaction on the intermediate product 1, carbonic ester, thionyl chloride and the like under high temperature conditions to obtain an intermediate product 2, and then oxidizing the intermediate product 2 by using an oxidant such as sodium periodate to obtain Compound 7.

In a preferred embodiment, the electrolyte salt is selected from at least one of LiPF₆, LiPO₂F₂, LiBF₄, LiBOB, LiSbF₆, LiAsF₆, LiCF₃SO₃, LiDFOB, LiN(SO₂CF₃)₂, LiC(SO₂CF₃)₃, LiN(SO₂C₂F₅)₂, LiN(SO₂F)₂, LiCl, LiBr, LiI, LiClO₄, LiBF₄, LiB₁₀Cl₁₀, LiAlCl₄, lithium chloroborane, lithium of lower aliphatic carboxylic acid with 4 or less carbon atoms, lithium tetraphenylborate and lithium imide. Particularly, the electrolyte salt may be inorganic electrolyte salts such as LiBF₄, LiClO₄, LiAlF₄, LiSbF₆, LiTaF₆ and LiWF₇; fluorophosphoric acid electrolyte salts such as LiPF₆; tungstic acid electrolyte salts such as LiWOFs; carboxylic acid electrolyte salts such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li and CF₃CF₂CF₂CF₂CO₂Li; sulfonic acid electrolyte salts such as CH₃SO₃Li; imide electrolyte salts such as LiN(FCO₂)₂, LiN(FCO)(FSO₂), LiN(FSO₂)₂, LiN(FSO₂)(CF₃SO₂), LiN(CF₃SO₂)₂, LiN(C₂F₅SO₂)₂, cyclic 1, 2-perfluoroethane disulfonimide lithium, cyclic 1,3-perfluoropropanedisulfonimide lithium and LiN(CF₃SO₂)(C₄F₉SO₂); methyl electrolyte salts such as LiC(FSO₂)₃, LiC(CF₃SO₂)₃ and LiC(C₂F₅SO₂)₃; oxalic acid electrolyte salts such as lithium difluoro oxalato borate, lithium bis (oxalato) borate, lithium tetrafluoro oxalato phosphate, lithium difluoro bis (oxalato) phosphate, and lithium tri (oxalato) phosphate; and fluorine-containing organic electrolyte salts such as LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂ and LiBF₂(C₂F₅SO₂)₂.

Usually, the electrolyte salt in the electrolyte is the transmission unit of lithium ion. The concentration of the electrolyte salt directly affects the transmission speed of lithium ion, while the transmission speed of lithium ion will affect the potential change of the negative electrode. In the quick-charge process of battery, it is necessary to improve the transmission speed of lithium ions as much as possible, so as to prevent the formation of lithium dendrites caused by the rapid decrease of negative electrode potential, which would bring potential safety hazards to the battery, and meanwhile, it prevents the rapid attenuation of the cycle capacity of the battery. Preferably, the total concentration of the electrolyte salt in the electrolyte may be 0.5mol/L - 2 .0mol/L, 0.5mol/L - 0.6mol/L, 0.6mol/L - 0.7mol/L, 0.7mol/L - 0.8mol/L, 0.8mol/L - 0.9mol/L, 0.9mol/L - 1.0mol/L, 1.0mol/L - 1.1mol/L, 1.1mol/L - 1.2mol/L, 1.2mol/L - 1.3mol/L, 1.3mol/L - 1.4mol/L, 1.4mol/L - 1.5mol/L, 1.5mol/L - 1.6mol/L, 1.6mol/L - 1.7mol/L, 1.7mol/L - 1.8mol/L, 1.8mol/L - 1.9mol/L or 1.9mol/L - 2 .0mol/L, further preferred may be 0.6mol/L - 1.8mol/L, 0.7mol/L - 1.7mol/L or 0.8mol/L - 1.5mol/L.

In some embodiments, the non-aqueous electrolyte further includes a supplemental additive, the supplemental additive includes at least one of cyclic sulfuric acid ester compound, sultone compound, cyclic carbonate ester compound, phosphate ester compound, borate ester compound, and nitrile compound.

In a preferred embodiment, the cyclic sulfuric acid ester compound is selected from at least one of ethylene sulfate, propylene sulfate, or methyl ethylene sulfate;
the sultone compound is selected from at least one of methylmethylene disulfonate, 1,3-propanesultone, 1,4-butane sultone, or 1,3-propylene sultone;
the cyclic carbonate ester compound is selected from at least one of vinylethylene carbonate, fluoroethylene carbonate or a compound represented by structure formula 2, 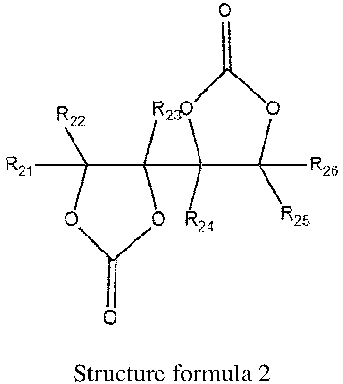
in structural formula 2, R₂₁, R₂₂, R₂₃, R₂₄, R₂₅ and R₂₆ are each independently selected from one of a hydrogen atom, a halogen atom and a C1-C5 group;
the phosphate ester compound is selected from at least one of tris (trimethylsilyl) phosphate and a compound represented by structural formula 3: 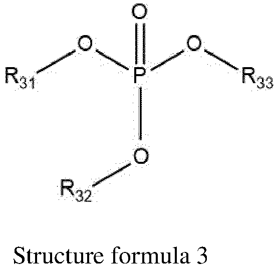
in structural formula 3, R₃₁, R₃₂ and R₃₂ are each independently selected from a C1-C5 saturated hydrocarbon group, a C1-C5 unsaturated hydrocarbon group, a C1-C5 halogenated hydrocarbon group and -Si(CₘH₂ₘ₊₁)₃, m is a natural number of 1~3, and at least one of R₃₁, R₃₂ and R₃₃ is an unsaturated hydrocarbon group.

In a preferred embodiment, the unsaturated phosphate ester compound may be at least one selected from the group consisting of tris (trimethylsilyl) phosphate, phosphoric acid tripropargyl ester, dipropargyl methyl phosphonate, dipropargyl ethyl phosphate, dipropargyl propyl phosphate,dipropargyl trifluoromethyl phosphate, dipropargyl-2, 2, 2-trifluoroethyl phosphate, dipropargyl-3, 3, 3-trifluoropropyl phosphate, dipropargyl hexafluoroisopropyl phosphate, phosphoric acid triallyl ester, diallyl methyl phosphate, diallyl ethyl phosphate, diallyl propyl phosphate, diallyl trifluoromethyl phosphate, diallyl-2 , 2 , 2-trifluoroethyl phosphate, diallyl-3, 3, 3-trifluoropropyl phosphate or diallyl hexafluoroisopropyl phosphate.

The borate ester compound is selected from tris (trimethylsilyl) borate;
the nitrile compound is selected from one or more of butanedinitrile, glutaronitrile, ethylene glycol bis (propionitrile) rther, hexanetricarbonitrile, adiponitrile, pimelic dinitrile, hexamethylene dicyanide, azelaic dinitrile and sebacic dinitrile.

In other embodiments, the supplemental additive may also include other additives that improve battery performance: for example, additives that improve battery safety performance, in particular flame retardant additives such as fluorophosphate and cyclophosphazene, or overcharge prevention additives such as tert-amylbenzene and tert-butyl benzene.

In some embodiments, an addition amount of the supplemental additive is 0.01%-30% based on the total mass of the non-aqueous electrolyte being 100%.

It should be noted that, unless otherwise specified, in general, the addition amount of any optional substance of the supplemental additive in the non-aqueous electrolyte is below 10%, preferably 0.1-5%, and more preferably 0.1-2%. Specifically, the addition amount of any optional substance of the supplemental additive may be 0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5% and 10%.

In some embodiments, when the supplemental additive is selected from fluoroethylene carbonate, the addition amount of the fluoroethylene carbonate is 0.05%-30% based on the total mass of the non-aqueous electrolyte being 100%.

In some embodiments, the solvent includes one or more of ether solvent, nitrile solvent, carbonate ester solvent, and carboxylic acid ester solvent.

In some embodiments, ether solvent includes cyclic ether or chain ether, preferably chain ether having 3~10 carbon atoms and cyclic ether having 3~6 carbon atoms, cyclic ether may be but not limited to one or more of 1, 3-dioxolane (DOL), 1, 4-dioxane (DX), crown ether, tetrahydrofuran (THF), 2-methyl tetrahydrofuran (2-CH₃-THF), 2-trifluoromethyl tetrahydrofuran (2-CF₃-THF); chain ether may specifically be but not limited to dimethoxymethane, diethoxymethane, ethoxymethoxymethane, glycol di-n-propyl ether, glycol di-n-butyl ether and diethylene glycol dimethyl ether. Chain ethers have high solvability with lithium ions and can improve ion dissociation, therefore, dimethoxymethane, diethoxymethane and ethoxymethoxymethane which have low viscosity and can impart high ionic conductivity are particularly preferred. One of the ether compounds may be used alone, or any combination of two or more and in any ratio may be used. The addition amount of ether compounds is not particularly limited, and is arbitrary within the range of not significantly damaging the effect of the high-voltage lithium ion battery of the present application, the volume ratio is usually more than 1%, preferably more than 2%, more preferably more than 3%, based on the volume ratio of the non-aqueous solvent being 100%; in addition, the volume ratio is usually less than 30%, preferably less than 25%, and more preferably less than 20%. When two or more ether compounds are used in combination, just need to make the total amount of the ether compounds be in the above range. When the addition amount of the ether compound is within the above preferable range, it is likely to secure the resulting improvement effect in ionic conductivity brought about by the increase of dissociation degree and decrease of viscosity of lithium ion of chain ether. In addition, when the negative electrode active material is a carbon material, the phenomenon of co-intercalation of chain ether and lithium ion can be suppressed, so that the input and output characteristics and charge and discharge rate characteristics can reach an appropriate range.

In some embodiments, nitrile solvent may be but is not limited to one or more of acetonitrile, glutaronitrile and malononitrile.

In some embodiments, carbonate ester solvent includes cyclic carbonate or chain carbonate, cyclic carbonate may be but is not limited to one or more of ethylene carbonate (EC), propylene carbonate (PC), γ-butyrolactone (GBL) and butylene carbonate (BC); chain carbonate may be but is not limited to one or more of dimethyl carbonate (DMC), ethyl methyl carbonate (EMC), diethyl carbonate (DEC) and dipropyl carbonate (DPC). There is no special limit on the content of the cyclic carbonate, which is arbitrary in the range of not significantly damaging the performances of the lithium ion battery of the application, but in the case where one is used alone, the lower limit of the content is usually 3% by volume or more, preferably 5% by volume or more, relative to the total content of solvent in the non-aqueous electrolyte. By setting this range, the decrease of conductivity caused by the decrease of dielectric constant of non-aqueous electrolyte can be avoided, and the high-current discharge characteristics, stability relative to the negative electrode and cycle performance of non-aqueous electrolyte battery can easily reach a good range. In addition, the upper limit is usually 90% or less by volume, preferably 85% or less by volume, and more preferably 80% or less by volume. By setting this range, the oxidation/reduction resistance of the non-aqueous electrolyte can be improved, thus contributing to the improvement of the stability during high-temperature storage. The content of the chain carbonate is not specifically defined. It is usually 15% or more by volume, preferably 20% or more by volume, and more preferably 25% or more by volume, relative to the total content of solvent in the non-aqueous electrolyte. In addition, it is usually 90% or less by volume, preferably 85% or less by volume, and more preferably 80% or less by volume. By keeping the content of chain carbonate in the above range, it is easy to make the viscosity of non-aqueous electrolyte reach an appropriate range, inhibit the decrease of ionic conductivity, and further help to make the output characteristics of non-aqueous electrolyte battery reach a good range. When two or more chain carbonates are used in combination, just need to make the total amount of the chain carbonates be in the above range.

In some embodiments, it is also preferable to use chain carbonate with fluorine atoms ("fluorinated chain carbonate"). The number of fluorine atoms in the fluorinated chain carbonate is not particularly defined as long as it is 1 or more, but it is usually 6 or less, preferably 4 or less. In the case where the fluorinated chain carbonate has a plurality of fluorine atoms, the fluorine atoms may be bonded to each other on the same carbon, or may be bonded to different carbons. Examples of fluorinated chain carbonate include fluorinated dimethyl carbonate derivatives, fluorinated ethyl methyl carbonate derivatives, and fluorinated diethyl carbonate derivatives, etc.

Carboxylic acid ester solvent includes cyclic carboxylic ester and / or chain carboxylic ester. Examples of cyclic carboxylic ester include one or more of γ-butyrolactone, γ-valerolactone and δ-valerolactone. Examples of chain carboxylic ester include one or more of methyl acetate (MA), ethyl acetate (EA), n-propyl acetate (EP), butyl acetate, propyl propionate (PP) and buty propionate.

In some embodiments, sulfones solvent includes cyclic sulfones and chain sulfones, preferably, in the case of cyclic sulfones, it is usually has 3~6 carbon atoms, preferably 3~5 carbon atoms, and in the case of chain sulfones, it is usually has 2~6 carbon atoms, preferably 2~5 carbon atoms. The addition amount of sulfones solvent is not particularly limited, and is arbitrary within the range of not significantly damaging the effect of the lithium ion battery of the present application, the volume ratio is usually more than 0.3%, preferably more than 0.5%, more preferably more than 1%, based on the volume ratio of the non-aqueous solvent being 100%; in addition, the volume ratio is usually less than 40%, preferably less than 35%, and more preferably less than 30%. When two or more sulfones solvents are used in combination, just need to make the total amount of the sulfones solvents be in the above range. When the addition amount of sulfones solvent is in the above range, it is likely to obtain an electrolyte with with excellent high-temperature storage stability.

In a preferred embodiment, the solvent is a mixture of cyclic carboxylic ester and chain carboxylic ester.

In some embodiments, the positive electrode further includes a positive current collector, the positive electrode material layer covers the surface of the positive current collector. In this application, the part of the positive electrode except the positive current collector is called positive electrode material layer.

The positive current collector is selected from metal materials that can conduct electrons. Preferably, the positive current collector includes one or more of Al, Ni, Sn, Cu and stainless steel. In a more preferred embodiment, the positive current collector is selected from aluminum foil.

In some embodiments, the positive electrode material layer further includes a positive electrode binder and a positive electrode conductive agent, and the positive electrode active material, positive electrode binder and positive electrode conductive agent are blended to obtain the positive electrode material layer.

In some embodiments, the positive electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, thermoplastic polyimide, polyethylene, polypropylene or other thermoplastic resins; acrylic resin; and styrene butadiene ribber.

In some embodiments, the positive electrode conductive agent includes one or more of metal conductive agent, carbon-based material, metal oxide-based conductive agent and composite conductive agent. Specifically, the metal conductive agent may be copper powder, nickel powder, silver powder and other metals. The carbon-based materials may be conductive graphite, conductive carbon black, conductive carbon fiber or graphene, etc. The metal oxide-based conductive agent may be tin oxide, iron oxide, zinc oxide, etc. The composite conductive agent may be composite powder, composite fiber, etc. More specifically, conductive carbon black may be one or more of acetylene black, 350G, Coqin black, carbon fiber (VGCF), and carbon nanotubes (CNTs).

In some embodiments, the negative electrode includes a negative electrode material layer including a negative electrode active material. The negative electrode active material includes one or more of a silicon-based negative electrode, a carbon-based negative electrode and a tin-based negative electrode.

In a preferred embodiment, the carbon-based negative electrode may include graphite, hard carbon, soft carbon, graphene, mesocarbon microbeads, etc. The graphite includes but is not limited to one or more of natural graphite, artificial graphite, amorphous carbon, carbon-coated graphite, graphite-coated graphite and resin-coated graphite. The natural graphite may be flaky graphite, graphite in flaky texture, soil graphite and / or graphite particles obtained from these graphite by performing spherical and compact treatments. The artificial graphite can be obtained by performing graphitization on organic substances such as coal tar pitch, coal heavy crude oil, atmospheric residual oil, petroleum heavy crude oil, aromatic hydrocarbon, nitrogen-containing cyclic compound, sulfur-containing cyclic compound, polyphenyl, polyvinyl chloride, polyvinyl alcohol, polyacrylonitrile, polyvinyl butyral, natural polymer, polyphenylene sulfide, polyphenyl ether, furfuran resin, phenolic resin, imide resin and the like at high temperature. The amorphous carbon may be amorphous carbon particles obtained by heat treatment for more than one time using a readily graphitizable carbon precursor such as tar or pitch as a raw material in a temperature range (400-2200°C) where graphitization does not occur, or amorphous carbon particles obtained by performing heat treatments using a hardly graphitizable carbon precursor such as resin as a raw material. The carbon-coated graphite may be prepared by mixing natural graphite and/or artificial graphite with carbon precursors of organic compounds such as tar, asphalt and resin, and performing heat treatment at 400~2300°C for at least once. The obtained natural graphite and/or artificial graphite is used as the nuclear graphite, and amorphous carbon is used to coat it to obtain a carbon-graphite composite. The carbon-graphite composite may be in the form of the whole or part of the surface of the nuclear graphite coated with amorphous carbon, or it may be in the form in which a plurality of primary particles are compounded by using carbon derived from the carbon precursor as a binder. In addition, the carbon-graphite composite may be obtained by making hydrocarbon gases such as benzene, toluene, methane, propane and aromatic volatile components react with natural graphite and/or artificial graphite at high temperature, and carbon deposit on the surface of graphite. The graphite-coated graphite may be prepared by mixing natural graphite and/or artificial graphite with carbon precursors of graphitizable organic compounds such as tar, asphalt, resin and the like, and performing heat treatment for more than one time at 2400~3200°C. The obtained natural graphite and/or artificial graphite is used as the nuclear graphite, and the whole or part of the surface of the nuclear graphite is coated with the graphitic compound, so that the graphite-coated graphite is obtained. The resin-coated graphite may be prepared by mixing natural graphite and/or artificial graphite with resin and the like, drying at a temperature lower than 400°C, taking the natural graphite and/or artificial graphite thus obtained as nuclear graphite, and coating the nuclear graphite with resin and the like. Examples of the organic compounds of tar, pitch and resin include carbonizable organic compounds selected from coal heavy crude oil, DC heavy crude oil, decomposed petroleum heavy crude oil, aromatic hydrocarbon, N-ring compound, S-ring compound, polyphenyl, organic synthetic polymer, natural polymer, thermoplastic resin and thermosetting resin.

In a preferred embodiment, the silicon-based negative electrode may include a silicon material, a silicon oxide, a silicon-carbon composite material, and a silicon alloy material, and the like. The addition amount of the silicon-based material is greater than 0 and less than 30%. Preferably, the upper limit of the addition amount of the silicon-based material is 10%, 15%, 20% or 25%; the lower limit of the addition amount of the silicon-based material is 5%, 10% or 15%. The silicon-based material is one or more of silicon nanoparticle, silicon nanowire, silicon nanotube, silicon film, 3D porous silicon and hollow porous silicon.

In a preferred embodiment, the tin-based negative electrode may include tin, tin carbon, tin oxide, tin-based alloy and tin metal compound. The tin-based alloy refers to an alloy composed of tin and one or more of Cu, Ag, Co, Zn, Sb, Bi and In.

In some embodiments, the negative electrode further includes a negative current collector, the negative electrode material layer covers the surface of the negative current collector. In this application, the part of the negative electrode except the negative current collector is called negative electrode material layer.

The negative current collector is selected from metal materials that can conduct electrons. Preferably, the negative current collector includes one or more of Al, Ni, Sn, Cu and stainless steel. In a more preferred embodiment, the negative current collector is selected from aluminum foil.

In some embodiments, the negative electrode material layer further includes a negative electrode binder and a negative electrode conductive agent, and the negative electrode active material, negative electrode binder and negative electrode conductive agent are blended to obtain the negative electrode material layer. In some embodiments, the negative electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, thermoplastic polyimide, polyethylene, polypropylene or other thermoplastic resins; acrylic resin; carboxymethyl cellulose sodium; and styrene butadiene ribber.

The negative electrode conductive agent includes one or more of conductive carbon black, conductive carbon sphere, conductive graphite, conductive carbon fiber, carbon nanotube, graphene or reduced graphene oxide.

In some embodiments, the battery further includes a separator disposed between the positive electrode and the negative electrode.

The separator may be an existing conventional membrane, a polymer membrane, a non-woven fabric and the like, including but not limited to monolayer PP (polypropylene), monolayer PE (polyethylene), double-layer PP/PE, double-layer PP/PP and 3-layer PP/PE/PP membranes.
The application will be further illustrated by the following embodiments.

Compounds represented by structural formula 1 used in the following embodiments are shown in Table 1 below:

**Table 1**

| | | | |
|---|---|---|---|
| Compound 1 | 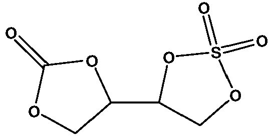 | Compound 4 | 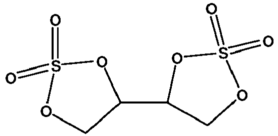 |
| Compound 5 | 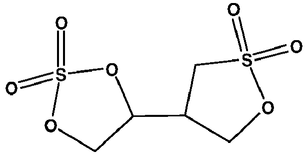 | Compound 7 | 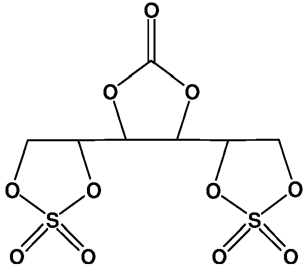 |
| Compound 8 | 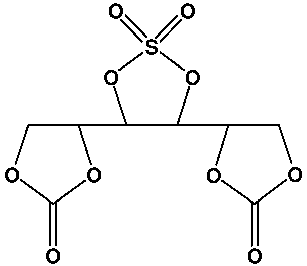 | Compound 10 | 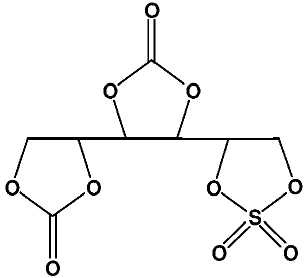 |
| Compound 15 | 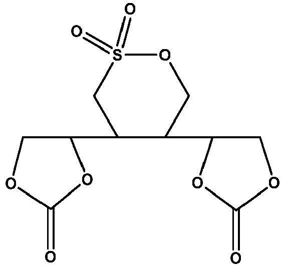 | Compound 21 | 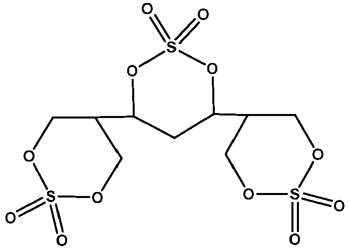 |

**Table 2 Parameter design of embodiments and comparative examples**

| Group | Positive electrode plate | | | | | Electrolyte | | (H/T)×M/ 1000 |
|---|---|---|---|---|---|---|---|---|
| | Type of positive electrode active material | Potential of positive electrode with respect to Li / V | Thickness of positive electrode material layer H/µm | Element doped in the positive electrode | Percentage mass mass content of the doped positive electrode material T/% | Percentage mass content M of the compound represented by structure formula 1 | Supplemental additive and its content/% | |
| Embodiment 1 | LiNi_{0.5}Co_{0.2}Mn_{0.3}O₂ | 4.35 | 120 | W | 0.03 | Compound 1:0.5 | - | 2.00 |
| Embodiment 2 | LiNi_{0.5}Co_{0.2}Mn_{0.3}O₂ | 4.35 | 100 | W | 0.5 | Compound 1:0.5 | - | 0.10 |
| Embodiment 3 | LiNi_{0.5}Co_{0.2}Mn_{0.3}O₂ | 4.35 | 100 | W | 0.01 | Compound 1:0.4 | - | 4.00 |
| Embodiment 4 | LiNi_{0.5}Co_{0.2}Mn_{0.3}O₂ | 4.35 | 105 | W | 0.03 | Compound 1:0.2 | - | 0.70 |
| Embodiment 5 | LiNi_{0.5}Co_{0.2}Mn_{0.3}O₂ | 4.35 | 115 | W | 0.005 | Compound 1:0.3 | - | 6.90 |
| Embodiment 6 | LiNi_{0.5}Co_{0.2}Mn_{0.3}O₂ | 4.35 | 100 | W | 0.4 | Compound 1:1 | - | 0.25 |
| Embodiment 7 | LiNi_{0.5}Co_{0.2}Mn_{0.3}O₂ | 4.35 | 90 | W | 0.02 | Compound 1:0.6 | - | 2.70 |
| Embodiment 8 | LiNi_{0.5}Co_{0.2}Mn_{0.3}O₂ | 4.35 | 120 | W | 0.02 | Compound 1:1 | - | 6.00 |
| Embodiment 9 | LiNi_{0.5}Co_{0.2}Mn_{0.3}O₂ | 4.35 | 120 | W | 0.01 | Compound 1:0.5 | - | 6.00 |
| Embodiment 10 | LiNi_{0.5}Co_{0.2}Mn_{0.3}O₂ | 4.35 | 100 | W | 0.05 | Compound 1:1 | - | 2.00 |
| Embodiment 11 | LiNi_{0.5}Co_{0.2}Mn_{0.3}O₂ | 4.35 | 80 | W | 0.01 | Compound 1:0.8 | - | 6.40 |
| Embodiment 12 | LiNi_{0.5}Co_{0.2}Mn_{0.3}O₂ | 4.35 | 90 | W | 0.5 | Compound 1:2.5 | - | 0.45 |
| Embodiment 13 | LiNi_{0.5}Co_{0.2}Mn_{0.3}O₂ | 4.35 | 120 | W | 0.5 | Compound 1:2 | - | 0.48 |
| Embodiment 14 | LiNi_{0.5}Co_{0.2}Mn_{0.3}O₂ | 4.35 | 120 | W | 0.02 | Compound 1:1.5 | - | 9.00 |
| Embodiment 15 | LiNi_{0.5}Co_{0.2}Mn_{0.3}O₂ | 4.35 | 110 | W | 0.02 | Compound 1:1.5 | - | 8.25 |
| Embodiment 16 | LiNi_{0.5}Co_{0.2}Mn_{0.3}O₂ | 4.35 | 100 | W | 0.02 | Compound 1:2 | - | 10.00 |
| Embodiment 17 | LiNi_{0.5}Co_{0.2}Mn_{0.3}O₂ | 4.35 | 130 | W | 0.03 | Compound 1:1.5 | - | 6.50 |
| Embodiment 18 | LiNi_{0.5}Co_{0.2}Mn_{0.3}O₂ | 4.35 | 110 | W | 0.2 | Compound 1:1 | - | 0.55 |
| Embodiment 19 | LiNi_{0.5}Co_{0.2}Mn_{0.3}O₂ | 4.35 | 130 | W | 0.1 | Compound 1:0.5 | - | 0.65 |
| Embodiment 20 | LiNi_{0.5}Co_{0.2}Mn_{0.3}O₂ | 4.35 | 90 | W | 0.005 | Compound 1:0.5 | - | 9.00 |
| Embodiment 21 | LiNi_{0.5}Co_{0.2}Mn_{0.3}O₂ | 4.35 | 130 | W | 0.04 | Compound 1:1 | - | 3.25 |
| Embodiment 22 | LiNi_{0.5}Co_{0.2}Mn_{0.3}O₂ | 4.35 | 140 | W | 0.06 | Compound 1:3 | - | 7.00 |
| Embodiment 23 | LiNi_{0.5}Co_{0.2}Mn_{0.3}O₂ | 4.35 | 90 | W | 0.6 | Compound 1:3 | - | 0.45 |
| Embodiment 24 | LiNi_{0.5}Co_{0.2}Mn_{0.3}O₂ | 4.35 | 150 | W | 0.1 | Compound 1:0.3 | - | 0.45 |
| Embodiment 25 | LiNi_{0.5}Co_{0.2}Mn_{0.3}O₂ | 4.35 | 105 | W | 0.03 | Compound 1:0.05 | - | 0.18 |
| Embodiment 26 | LiNi_{0.5}Co_{0.2}Mn_{0.3}O₂ | 4.35 | 115 | W | 0.2 | Compound 1:1 | - | 0.58 |
| Embodiment 27 | LiNi_{0.6}Co_{0.2}Mn_{0.2}O₂ | 4.35 | 100 | Al | 0.8 | Compound 1:1 | - | 0.13 |
| Embodiment 28 | LiNi_{0.6}Co_{0.2}Mn_{0.2}O₂ | 4.4 | 120 | Ti | 0.06 | Compound 1:0.6 | - | 1.20 |
| Embodiment 29 | LiNi_{0.7}Co_{0.1}Mn_{0.2}O₂ | 4.35 | 120 | Mg | 0.05 | Compound 1:0.5 | - | 1.20 |
| Embodiment 30 | LiNi_{0.8}Co_{0.1}Mn_{0.1}O₂ | 4.25 | 100 | W | 0.1 | Compound 1:0.6 | - | 0.60 |
| Embodiment 31 | LiNi_{0.8}Co_{0.1}Mn_{0.1}O₂ | 4.35 | 115 | B | 0.02 | Compound 1:0.2 | - | 1.15 |
| Embodiment 32 | LiNi_{0.75}Mn_{0.25}O₂ | 4.35 | 125 | Co | 0.05 | Compound 1:0.3 | - | 0.75 |
| Embodiment 33 | LiNi_{0.5}Co_{0.2}Mn_{0.3}O₂ | 4.2 | 120 | W | 0.03 | Compound 1:0.5 | - | 2.00 |
| Embodiment 34 | LiNi_{0.5}Co_{0.2}Mn_{0.3}O₂ | 4.1 | 120 | W | 0.03 | Compound 1:0.5 | - | 2.00 |
| Embodiment 35 | LiNi_{0.5}Co_{0.2}Mn_{0.3}O₂ | 4.25 | 120 | W | 0.03 | Compound 1:0.5 | - | 2.00 |
| Embodiment 36 | LiNi_{0.5}Co_{0.2}Mn_{0.3}O₂ | 4.45 | 120 | W | 0.03 | Compound 1:0.5 | - | 2.00 |
| Embodiment 37 | LiNi_{0.5}Co_{0.2}Mn_{0.3}O₂ | 4.5 | 120 | W | 0.03 | Compound 1:0.5 | - | 2.00 |
| Embodiment 38 | LiNi_{0.5}Co_{0.2}Mn_{0.3}O₂ | 4.6 | 120 | W | 0.03 | Compound 1:0.5 | - | 2.00 |
| Embodiment 39 | LiNi_{0.5}Co_{0.2}Mn_{0.3}O₂ | 4.35 | 120 | W | 0.03 | Compound 3:0.5 | - | 2.00 |
| Embodiment 40 | LiNi_{0.5}Co_{0.2}Mn_{0.3}O₂ | 4.35 | 120 | W | 0.03 | Compound 4:0.5 | - | 2.00 |
| Embodiment 41 | LiNi_{0.5}Co_{0.2}Mn_{0.3}O₂ | 4.35 | 120 | W | 0.03 | Compound 7:0.5 | - | 2.00 |
| Embodiment 42 | LiNi_{0.5}Co_{0.2}Mn_{0.3}O₂ | 4.35 | 120 | W | 0.03 | Compound 8:0.5 | - | 2.00 |
| Embodiment 43 | LiNi_{0.5}Co_{0.2}Mn_{0.3}O₂ | 4.35 | 120 | W | 0.03 | Compound 10:0.5 | - | 2.00 |
| Embodiment 44 | LiNi_{0.5}Co_{0.2}Mn_{0.3}O₂ | 4.35 | 120 | W | 0.03 | Compound 15:0.5 | - | 2.00 |
| Embodiment 45 | LiNi_{0.5}Co_{0.2}Mn_{0.3}O₂ | 4.35 | 120 | W | 0.03 | Compound 21:0.5 | - | 2.00 |
| Embodiment 46 | LiNi_{0.5}Co_{0.2}Mn_{0.3}O₂ | 4.35 | 120 | W | 0.03 | Compound 1: 0.5 | PS 1% | 2.00 |
| Embodiment 47 | LiNi_{0.5}Co_{0.2}Mn_{0.3}O₂ | 4.35 | 120 | W | 0.03 | Compound 1: 0.5 | DTD 1% | 2.00 |
| Embodiment 48 | LiNi_{0.5}Co_{0.2}Mn_{0.3}O₂ | 4.35 | 120 | W | 0.03 | Compound 1: 0.5 | Phosphoric acid tripropargyl ether 0.5% | 2.00 |
| Embodiment 49 | LiNi_{0.5}Co_{0.2}Mn_{0.3}O₂ | 4.35 | 120 | W | 0.03 | Compound 1: 0.5 | Butanedinitrile 1% | 2.00 |
| Comparative example 1 | LiNi_{0.5}Co_{0.2}Mn_{0.3}O₂ | 4.35 | 110 | - | - | Compound 1:0.5 | - | - |
| Comparative example 2 | LiNi_{0.5}Co_{0.2}Mn_{0.3}O₂ | 4.35 | 110 | W | 0.05 | - | - | - |
| Comparative example 3 | LiNi_{0.5}Co_{0.2}Mn_{0.3}O₂ | 4.35 | 70 | W | 0.05 | Compound 1:0.5 | - | 0.70 |
| Comparative example 4 | LiNi_{0.5}Co_{0.2}Mn_{0.3}O₂ | 4.35 | 90 | W | 0.4 | Compound 1:0.1 | - | 0.02 |
| Comparative example 5 | LiNi_{0.5}Co_{0.2}Mn_{0.3}O₂ | 4.35 | 120 | W | 0.02 | Compound 1:0.02 | - | 0.12 |
| Comparative example 6 | LiNi_{0.5}Co_{0.2}Mn_{0.3}O₂ | 4.35 | 90 | W | 0.003 | Compound 1:0.5 | - | 15.00 |
| Comparative example 7 | LiNi_{0.5}Co_{0.2}Mn_{0.3}O₂ | 4.35 | 90 | W | 0.003 | Compound 1:0.08 | - | 2.40 |
| Comparative example 8 | LiNi_{0.5}Co_{0.2}Mn_{0.3}O₂ | 4.35 | 160 | W | 0.05 | Compound 1:0.5 | - | 1.60 |
| Comparative example 9 | LiNi_{0.5}Co_{0.2}Mn_{0.3}O₂ | 4.35 | 110 | W | 0.9 | Compound 1: 1 | - | 0.12 |
| Comparative example 10 | LiNi_{0.5}Co_{0.2}Mn_{0.3}O₂ | 4.35 | 100 | W | 0.5 | Compound 1:0.4 | - | 0.08 |
| Comparative example 11 | LiNi_{0.5}Co_{0.2}Mn_{0.3}O₂ | 4.35 | 130 | W | 0.1 | Compound 1:0.05 | - | 0.07 |
| Comparative example 12 | LiNi_{0.5}Co_{0.2}Mn_{0.3}O₂ | 4.35 | 100 | W | 0.2 | Compound 1:3.5 | - | 1.75 |
| Comparative example 13 | LiNi_{0.5}Co_{0.2}Mn_{0.3}O₂ | 4.35 | 130 | W | 0.01 | Compound 1: 1 | - | 13.00 |
| Comparative example 14 | LiNi_{0.5}Co_{0.2}Mn_{0.3}O₂ | 4.35 | 110 | W | 0.02 | Compound 1:3 | - | 16.50 |
| Comparative example 15 | LiNi_{0.5}Co_{0.2}Mn_{0.3}O₂ | 4.35 | 120 | W | 0.03 | - | - | 0.00 |
| Comparative example 16 | LiNi_{0.5}Co_{0.2}Mn_{0.3}O₂ | 4.2 | 120 | W | 0.03 | - | - | 0.00 |
| Comparative example 17 | LiNi_{0.5}Co_{0.2}Mn_{0.3}O₂ | 4.1 | 120 | W | 0.03 | - | - | 0.00 |
| Comparative example 18 | LiNi_{0.5}Co_{0.2}Mn_{0.3}O₂ | 4.25 | 120 | W | 0.03 | - | - | 0.00 |
| Comparative example 19 | LiNi_{0.5}Co_{0.2}Mn_{0.3}O₂ | 4.45 | 120 | W | 0.03 | - | - | 0.00 |
| Comparative example 20 | LiNi_{0.5}Co_{0.2}Mn_{0.3}O₂ | 4.5 | 120 | W | 0.03 | - | - | 0.00 |
| Comparative example 21 | LiNi_{0.5}Co_{0.2}Mn_{0.3}O₂ | 4.6 | 120 | W | 0.03 | - | - | 0.00 |

### Embodiment 1

The present embodiment is used to illustrate the battery and its preparation method of the present application, including the following steps.
1) Preparation of electrolyte: Ethylene carbonate (EC), diethyl carbonate (DEC) and ethyl methyl carbonate (EMC) were mixed according to the mass ratio of EC: EMC=3:7, and then lithium hexafluorophosphate (LiPF₆) was added till the molar concentration was 1 mol/L. Then, additives were added, and the content of each additive in the electrolyte was as shown in Table 2, and the content of the additive was calculated as a percentage of the total mass of the electrolyte.

### 2) Preparation of positive electrode

Positive electrode active material, conductive carbon black Super-P and binder Poly(vinylidene fluoride)(PVDF) were mixed according to the mass ratio of 93:4:3, and then the mixture was dispersed in N- methyl -2- pyrrolidone (NMP) to obtain a positive electrode slurry. The slurry was uniformly coated on both sides of the aluminum foil, dried, calendered and vacuum-dried, and an aluminum lead wire was welded by an ultrasonic welding machine to obtain a positive electrode plate with a thickness of 80~150µm. Selection of the positive electrode material and thickness of the positive electrode material layer are shown in Table 2.

### 3) Preparation of negative electrode

Negative electrode active material modified natural graphite, conductive carbon black Super-P, binder styrene butadiene rubber (SBR) and carboxymethyl cellulose (CMC) were mixed according to the mass ratio of 94:1:2.5:2.5, and then the mixture was dispersed in deionized water to obtain a negative electrode slurry. The slurry was coated on both sides of the copper foil, dried and calendere, and the nickel lead wire was welded by an ultrasonic welding machine to obtain a negative electrode plate.

### 4) Preparation of battery core

A polyethylene microporous membrane with a thickness of 20µm was placed between the positive electrode plate and the negative electrode plate as a separator. And then the sandwich structure composed of the positive electrode plate, the negative electrode plate and the separator was wound. Then the winding body was flattened and placed in an aluminum-plastic film. After the lead wires of the positive and negative electrodes are respectively led out, the aluminum-plastic film is hot-pressed and sealed to obtain the battery cell to be injected with liquid.

### 5) Injection and formation of battery core

In a glove box with dew point controlled below -40°C, the electrolyte prepared above was injected into the battery core. The amount of electrolyte must be sufficient to fill the voids in the cell. Then follow the steps below to carry out the formation: charging at 0.05C constant current for 180 min, charging at 0.01C constant current for 180 min, sealing after left for 24 hours to set. Then further charging to the cut-off voltage with at 0.2C constant current, and then discharging to 3.0V at 0.2C constant current after kept at room temperature for 24 hours.

### Embodiments 2~49

Embodiments 2~49 are used to illustrate the battery and its preparation method of the present application, including most of the steps in Embodiment 1, with the differences that:
The electrolyte additive components and the positive electrode material layer shown in Table 2 were used.

### Comparative examples 1~21

Comparative examples 1~21 are used to illustrate the battery and its preparation method of the present application, including most of the steps in Embodiment 1, with the differences that:
The electrolyte additive components and the positive electrode material layer shown in Table 2 were used.

### Performance tests

The following performance tests were conducted on the lithium ion batteries prepared above:
High-temperature cycle performance test:
At 45°C, the lithium ion batteries prepared in Embodiments and Comparative Examples were charged to at 1C constant current, the initial capacity and the initial impedance of the lithium ion battery were recorded, and full charge-discharge cycle tests were performed, until the capacity of the lithium ion battery was reduced to 80% of the initial capacity, and the number of cycles was recorded.
(1) The test results obtained from Embodiments 1-32 and Comparative Examples 1-14 are shown in Table 3.

**Table 3**

| Group | Initial capacity (mAh) | Initial impedance (ohm) | Number of cycles at 45°C |
|---|---|---|---|
| Embodiment 1 | 1120.00 | 9.0 | 1835 |
| Embodiment 2 | 1011.00 | 14 | 1720 |
| Embodiment 3 | 1082.00 | 10.6 | 1796 |
| Embodiment 4 | 1075.00 | 11.2 | 1775 |
| Embodiment 5 | 1032.00 | 13.2 | 1736 |
| Embodiment 6 | 1031.00 | 13.3 | 1736 |
| Embodiment 7 | 1101.00 | 9.6 | 1820 |
| Embodiment 8 | 1065.00 | 11.6 | 1770 |
| Embodiment 9 | 1061.00 | 11.7 | 1766 |
| Embodiment 10 | 1111.00 | 9.3 | 1829 |
| Embodiment 11 | 1041.00 | 13.0 | 1742 |
| Embodiment 12 | 1035.00 | 13.2 | 1738 |
| Embodiment 13 | 1038.00 | 13.1 | 1741 |
| Embodiment 14 | 1024.00 | 13.6 | 1730 |
| Embodiment 15 | 1030.00 | 13.4 | 1735 |
| Embodiment 16 | 1012.00 | 13.8 | 1726 |
| Embodiment 17 | 1034.00 | 13.2 | 1740 |
| Embodiment 18 | 1056.00 | 11.8 | 1760 |
| Embodiment 19 | 1070.00 | 11.5 | 1766 |
| Embodiment 20 | 1027.00 | 13.5 | 1733 |
| Embodiment 21 | 1092.00 | 9.8 | 1812 |
| Embodiment 22 | 1030.00 | 13.3 | 1734 |
| Embodiment 23 | 1028.00 | 13.4 | 1736 |
| Embodiment 24 | 1026.00 | 13.5 | 1733 |
| Embodiment 25 | 1014.00 | 13.7 | 1725 |
| Embodiment 26 | 1060.00 | 11.7 | 1762 |
| Embodiment 27 | 1198.00 | 15.9 | 1648 |
| Embodiment 28 | 1235.00 | 15.1 | 1665 |
| Embodiment 29 | 1246.00 | 16.3 | 1632 |
| Embodiment 30 | 1285.00 | 17.3 | 1601 |
| Embodiment 31 | 1318.00 | 17.0 | 1611 |
| Embodiment 32 | 1242.00 | 18.0 | 1588 |
| Comparative example 1 | 856.00 | 27.6 | 1335 |
| Comparative example 2 | 843.00 | 29.5 | 1311 |
| Comparative example 3 | 935.00 | 23.1 | 1435 |
| Comparative example 4 | 892.00 | 25.2 | 1401 |
| Comparative example 5 | 912.00 | 24.2 | 1410 |
| Comparative example 6 | 871.00 | 26.3 | 1371 |
| Comparative example 7 | 946.00 | 22.4 | 1450 |
| Comparative example 8 | 933.00 | 23.2 | 1431 |
| Comparative example 9 | 921.00 | 23.9 | 1418 |
| Comparative example 10 | 906.00 | 24.6 | 1395 |
| Comparative example 11 | 904.00 | 24.8 | 1385 |
| Comparative example 12 | 941.00 | 22.9 | 1440 |
| Comparative example 13 | 883.00 | 25.5 | 1381 |
| Comparative example 14 | 863.00 | 26.6 | 1360 |

It can be seen from the test results in Table 3, when "the thickness H of the positive electrode material layer", "the percentage mass mass content T of the element E in the positive electrode material layer", and "the percentage mass content M of the compound represented by structural formula 1 in the non-aqueous electrolyte" satisfy the relationship of 0.1≤(H/T)×M/1000≤10, and 80≤H≤150, 0.005≤T≤0.8, 0.05≤M≤3, the number of cycles of the lithium ion battery at high temperature can be effectively increased, thereby prolonging the service life of the lithium ion battery under high-voltage and high-temperature conditions.

It can be seen from the test results of Embodiments 1~32 and Comparative Examples 4, 10, 11, 13, and 14, even if "the thickness H of the positive electrode material layer", "the percentage mass mass content T of the element E in the positive electrode material layer", and "the percentage mass content M of the compound represented by structural formula 1 in the non-aqueous electrolyte" meet the range limitation, when the (H/T)×M/1000 value is too large or too small, the lithium ion battery still does not have a good high-temperature cycle performance. At the same time, compared with the test results of Comparative Examples 5, 7-8 and 12, it can be seen that the value of (H/T)×M/1000 is the same between 0.1 and 10, but "the thickness H of the positive electrode material layer", "the percentage mass mass content T of the element E in the positive electrode material layer", and "the percentage mass content M of the compound represented by structural formula 1 in the non-aqueous electrolyte" do not meet the range limitation, the high-temperature cycle performance of the battery still cannot be improved. It indicates that there is a strong correlation among "the thickness H of the positive electrode material layer", "the percentage mass mass content T of the element E in the positive electrode material layer", and "the percentage mass content M of the compound represented by structural formula 1 in the non-aqueous electrolyte". By doping element E in the positive electrode active material, the stability of the positive electrode active material under high voltage can be effectively improved. However, the interface film formed by the decomposition of the compound represented by structural formula 1 on the surface of the positive active material has a binding effect with the element E on the surface of the positive electrode active material, the compactness and stability of the interface film are improved through the combination with element E, which effectively inhibits the structural collapse of the positive electrode active material in the high-temperature cycle process, inhibits the dissolution of metal ions, and avoids the continuous decomposition of non-aqueous electrolyte solvent on the surface of the positive electrode active material. At the same time, the interface film has good ionic conductivity and the impedance of the battery is effectively reduced. The ranges of "the thickness H of the positive electrode material layer", "the percentage mass mass content T of the element E in the positive electrode material layer", and "the percentage mass content M of the compound represented by structural formula 1 in the non-aqueous electrolyte" are defined and controlled by the relation formula 0.1≤(H/T)×M/1000≤10, thereby being beneficial to ensuring the infiltration of the compound represented by structural formula 1 in the non-aqueous electrolyte and infiltration of the positive electrode active material, ensuring that there is sufficient element E on the surface of the positive electrode active material to contact with the compound represented by structural formula 1. The influence of various factors on the high-temperature cycle performance of the battery is comprehensively coordinated, so as to obtain the lithium ion battery with excellent high-voltage and high-temperature cycle performances.

It can be seen from the test results of Embodiments 1, 5, and 20, when the content of element E doped in the positive electrode active material is low, the structural stability of the positive electrode active material under high voltage cannot be effectively ensured, and the quality of the interface film is affected at the same time, resulting in the problems of structural damage, gas generation, etc during the battery cycle, and affecting the battery cycle performances. It can be seen from the test results of Embodiments 1, 2, and 27, when the content of element E doped in the positive electrode active material is high, the diffusion of lithium ions is reduced, the impedance of the battery is increased, and the battery capacity is reduced.

It can be seen from the test results of Embodiments 1, 14-16, and 25, with the increase in the content of the compound represented by structural formula 1, the cycle performance of the battery first becomes better and then becomes worse. That is, when the addition amount of the compound represented by structural formula 1 in the electrolyte is 0.5%, the overall performance of the battery can be effectively improved. When the content is too low, it is difficult to form a stable and compact interface film at high voltage, which leads to the accelerated oxidative decomposition of electrolyte. When the content is too high, the residual amount in the positive electrode plate would also increase, and the excessive compound represented by structural formula 1 would enhance the internal side reaction of the battery, thereby increasing the battery impedance, and deteriorating the performance of the battery cycle.

It can be seen from the test results of Embodiments 26-32, under the conditions of satisfying the relationship of 0.1≤(H/T)×M/1000≤10, and limiting the range of H, T and M values, the number of high-temperature cycles of lithium ion batteries can be greatly improved by doping the positive active materials with different elements. It indicates that the positive electrode active material doped with different elements have good cooperation effect with the compound represented by structural formula 1.

(2) The test results obtained from Embodiments 1, 33~38 and Comparative Examples 15-21 are shown in Table 4.

**Table 4**

| Group | Initial capacity (mAh) | Initial impedance (ohm) | Number of cycles at 45°C |
|---|---|---|---|
| Embodiment 1 | 1120.00 | 9.0 | 1835 |
| Embodiment 33 | 1001.00 | 8.7 | 1845 |
| Embodiment 34 | 956.00 | 8.1 | 1856 |
| Embodiment 35 | 1052.00 | 9.4 | 1827 |
| Embodiment 36 | 1195.00 | 9.6 | 1820 |
| Embodiment 37 | 1231.00 | 10.2 | 1803 |
| Embodiment 38 | 1284.00 | 10.6 | 1795 |
| Comparative example 15 | 839.00 | 29.8 | 1302 |
| Comparative example 16 | 781.00 | 29.2 | 1330 |
| Comparative example 17 | 753.00 | 28.5 | 1358 |
| Comparative example 18 | 801.00 | 29.5 | 1314 |
| Comparative example 19 | 875.00 | 30.4 | 1275 |
| Comparative example 20 | 892.00 | 30.7 | 1256 |
| Comparative example 21 | 932.00 | 31.8 | 1221 |

It can be seen from the test results of Comparative Examples 15-21, with the increase of the operating voltage, although the initial capacity of the battery was correspondingly increased, the structure-breaking degree of the positive electrode material was also increased, and the high-temperature cycle performance of the battery was remarkably decreased. As can be seen from the test structures of Embodiments 1 and 33-28, by adding the compound represented by structural formula 1 and limiting by the relationship of 0.1≤(H/T)×M/1000≤10, a pressure-resistant and high-temperature-resistant interface film can be formed on the surface of the positive electrode active material to effectively inhibit the adverse effect of the operation voltage increase on the high-temperature cycle performance of the battery, and a lithium ion battery having both high capacity and long service life is obtained.

(3) The test results obtained from Embodiments 1 and 39~45 are shown in Table 5.

**Table 5**

| Group | Initial capacity (mAh) | Initial impedance (ohm) | Number of cycles at 45°C |
|---|---|---|---|
| Embodiment 1 | 1120.00 | 9.0 | 1835 |
| Embodiment 39 | 1118.00 | 9.2 | 1830 |
| Embodiment 40 | 1108.00 | 9.6 | 1822 |
| Embodiment 41 | 1116.00 | 9.3 | 1828 |
| Embodiment 42 | 1113.00 | 9.5 | 1824 |
| Embodiment 43 | 1110.00 | 9.4 | 1826 |
| Embodiment 44 | 1105.00 | 9.1 | 1831 |
| Embodiment 45 | 1103.00 | 8.9 | 1819 |

As can be seen from the test results in Table 5, when different compounds represented by structural formula 1 were used in Embodiments 1, 39-45, the range limitations for H, T and M values are also satisfied, indicating that the cyclic sulfur-containing groups commonly contained in the different compounds represented by structural formula 1 play a decisive role in the formation of the surface interface film of the positive electrode active material. It is presumed that the passivation film rich in element S generated by decomposition and the positive electrode active material doped with element E have better bonding strength, which improves the intercalation and de-intercalation efficiency of electrolyte ions, and inhibits the continuous decomposition of the non-aqueous electrolyte. The different compounds represented by structural formula 1 have good cooperation effects with the doped positive active materials, so that the high-temperature cycle performance of the battery can be generally improved,

(4) The test results obtained from Embodiments 1 and 46~49 are shown in Table 6.

**Table 6**

| Group | Initial capacity (mAh) | Initial impedance (ohm) | Number of cycles at 45°C |
|---|---|---|---|
| Embodiment 1 | 1120.00 | 9.0 | 1835 |
| Embodiment 46 | 1131.00 | 8.5 | 1845 |
| Embodiment 47 | 1126.00 | 8.7 | 1841 |
| Embodiment 48 | 1145.00 | 8.1 | 1853 |
| Embodiment 49 | 1134.00 | 8.4 | 1848 |

It can be seen from the test results in Table 6 that, on the basis of the lithium ion battery system provided by the application, PS (1,3- propane suhone), DTD (ethylene sulfate), phosphoric acid tripropargyl ether, butanedinitrile and the like are added as supplemental additives, so that the cycle performance of the battery can be further improved. It is presumed that there is a certain co-decomposition reaction between the compound represented by structural formula 1 and PS (1,3-propane suhone), DTD (ethylene sulfate), tris (trimethylsilyl) borate, phosphoric acid tripropargyl ether, or butanedinitrile, which can jointly participate in the formation of the interface film on the electrode surface, and the obtained interface film can improve the stability of the electrode material to improve the high-temperature cycle stability of the battery.

The above are only preferred embodiments of the present application, and not intended to limit the present application. Any modifications, equivalent substitutions and improvements made within the spirit and principle of the present application shall be included in the scope of protection of the present application. Further, the singular terms "a", "an" and "the" include plural reference and vice versa unless the context clearly indicates otherwise.

## Claims

1. A lithium ion battery, comprising a positive electrode containing a positive electrode material layer, a negative electrode and a non-aqueous electrolyte, the positive electrode material layer comprises a positive electrode active material, the positive electrode active material comprises LiₓNi_{y}Co_{z}M_{1-y-z}O₂, and 0.9≤x≤1.2, 0.5≤y≤1, 0≤z≤0.5, 0≤1-y-z≤0.5, M is at least one element selected from Mn and Al, the positive electrode active material is doped or coated with an element E, the element E is selected from one or more of Ba, Zn, Ti, Mg, Zr, W, Y, Si, Sn, B, Co, and P, and potential range of the positive electrode active material with respect to lithium metal is ≥ 4.25V;
the non-aqueous electrolyte comprises a solvent, an electrolyte salt and an additive, the additive comprises a compound represented by structural formula 1: 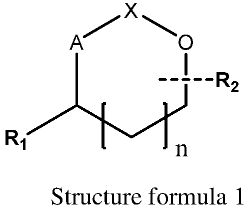
wherein n is 0 or 1, A is selected from C or O, X is selected from 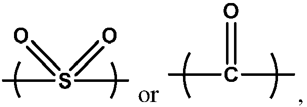 R₁ and R₂ are each independently selected from H, 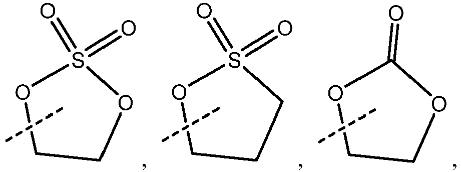 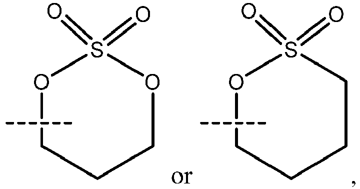 R₁ and R₂ are not both selected from H, and X, R₁ and R₂ contain at least one sulfur atom;
the lithium ion battery meets the following requirements:
0.1≤(H/T)×M/1000≤10; and
80≤H≤140, 0.005≤T≤0.8, 0.05≤M≤3;
wherein H is a thickness of the positive electrode material layer, in µm;
T is a percentage mass content of the element E in the positive electrode material layer, in %;
M is a percentage mass content of the compound represented by structure formula 1 in the non-aqueous electrolyte, in %.

2. The lithium ion battery of claim 1, wherein the potential range of the positive electrode active material with respect to lithium metal is 4.25V~4.6V.

3. The lithium ion battery of claim 1, wherein the lithium ion battery meets the following requirements:
0.5≤(H/T)×M/1000≤6.

4. The lithium ion battery of claim 1, wherein the thickness H of the positive electrode material layer is 90~120 µm.

5. The lithium ion battery of claim 1, wherein the percentage mass mass content T of the element E in the positive electrode material layer is 0.01%~0.2%

6. The lithium ion battery of claim 1, wherein the percentage mass content M of the compound represented by structural formula 1 in the non-aqueous electrolyte is 0.1%~1%.

7. The lithium ion battery of claim 1, wherein the compound represented by structural formula 1 is selected from one or more of the following compounds 1-22:

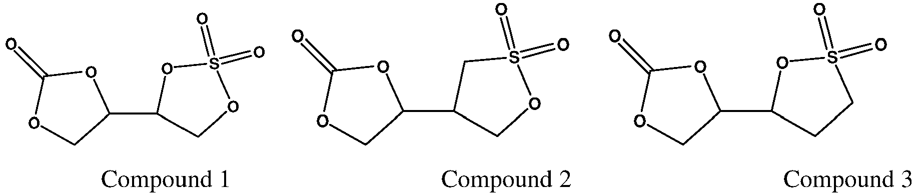

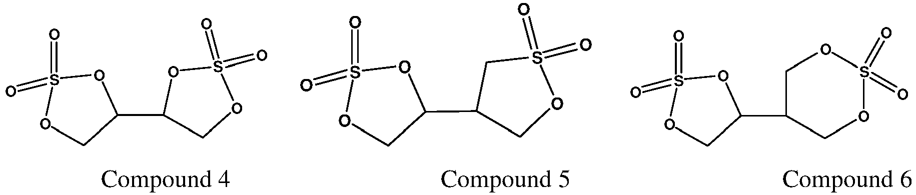

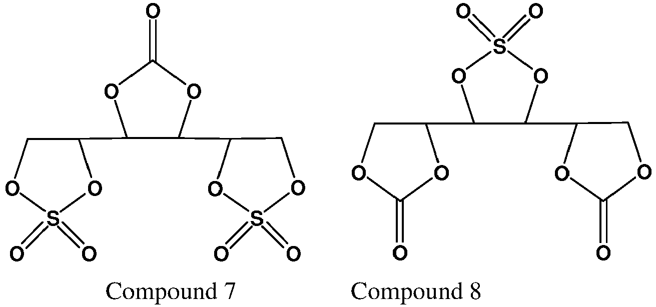

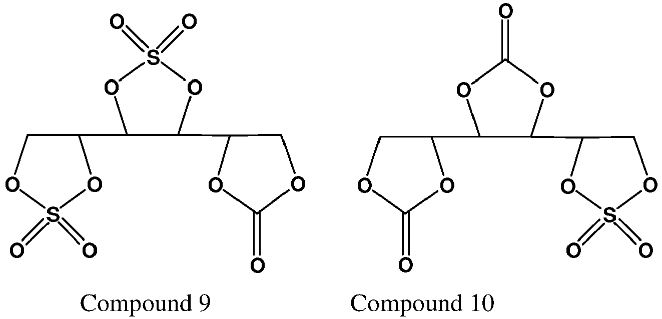

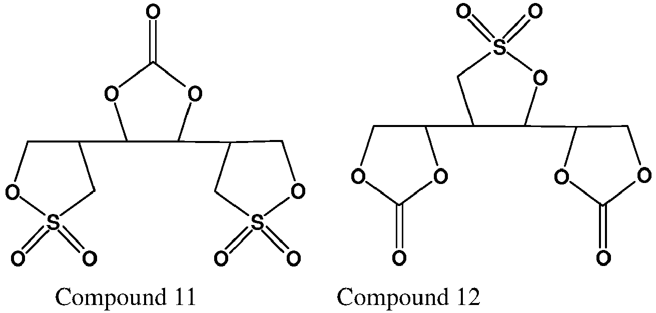

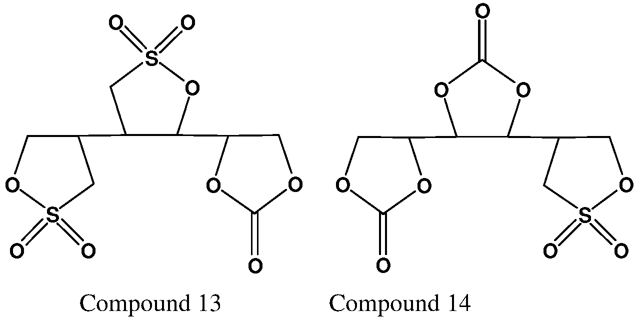

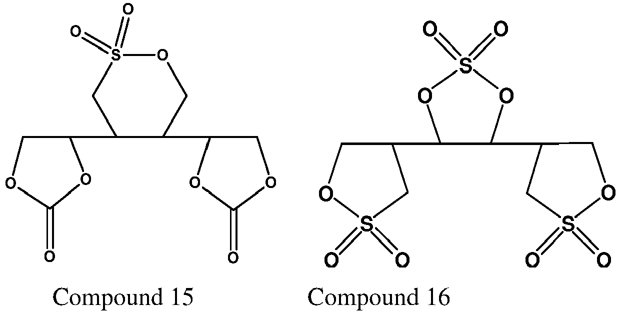

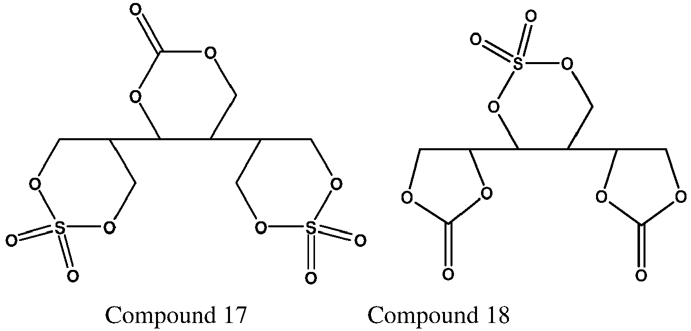

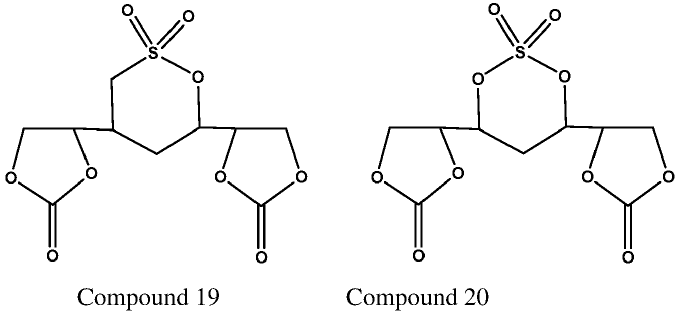

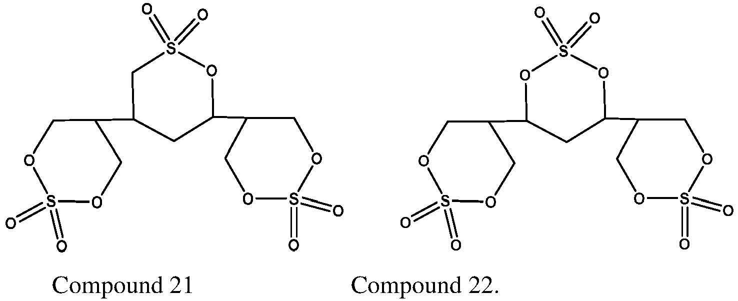

8. The lithium ion battery of claim 1, wherein the electrolyte salt is selected from at least one of LiPF₆, LiBOB, LiDFOB, LiDFOP, LiPO₂F₂, LiBF₄, LiSbF₆, LiAsF₆, LiN(SO₂CF₃)₂, LiN(SO₂C₂F₅)₂, LiC(SO₂CF₃)₃, LiN(SO₂F)₂, LiClO₄, LiAlCl₄, LiCF₃SO₃, Li₂B₁₀Cl₁₀ and lithium salt of lower aliphatic carboxylic acid.

9. The lithium ion battery of claim 1, wherein the non-aqueous electrolyte further comprises a supplemental additive, the supplemental additive comprises at least one of cyclic sulfuric acid ester compound, sultone compound, cyclic carbonate ester compound, phosphate ester compound, borate ester compound, and nitrile compound.

10. The lithium ion battery of claim 9, wherein an addition amount of the supplemental additive is 0.01%-30% based on the total mass of the non-aqueous electrolyte being 100%.

11. The lithium ion battery of claim 9, wherein the cyclic sulfuric acid ester compound is selected from at least one of ethylene sulfate, propylene sulfate, or methyl ethylene sulfate;
the sultone compound is selected from at least one of methylmethylene disulfonate, 1,3-propanesultone, 1,4-butane sultone, or 1,3-propylene sultone;
the cyclic carbonate ester compound is selected from at least one of vinylethylene carbonate, fluoroethylene carbonate or a compound represented by structure formula 2, 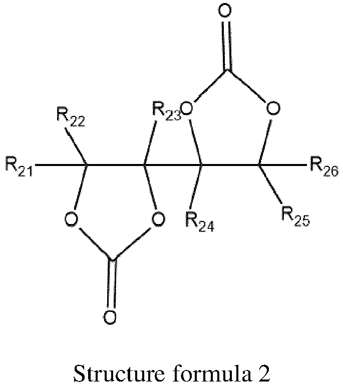
in structural formula 2, R₂₁, R₂₂, R₂₃, R₂₄, R₂₅ and R₂₆ are each independently selected from one of a hydrogen atom, a halogen atom and a C1-C5 group;
the phosphate ester compound is selected from at least one of tris (trimethylsilyl) phosphate and a compound represented by structural formula 3: 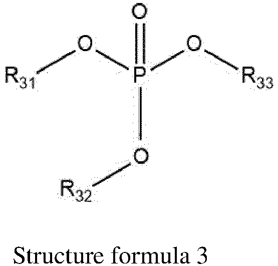
in structural formula 3, R₃₁, R₃₂ and R₃₂ are each independently selected from a C1-C5 saturated hydrocarbon group, a C1-C5 unsaturated hydrocarbon group, a C1-C5 halogenated hydrocarbon group and -Si(CₘH₂ₘ₊₁)₃, m is a natural number of 1~3, and at least one of R₃₁, R₃₂ and R₃₃ is an unsaturated hydrocarbon group;
the borate ester compound is selected from tris (trimethylsilyl) borate;
the nitrile compound is selected from one or more of butanedinitrile, glutaronitrile, ethylene glycol bis (propionitrile) rther, hexanetricarbonitrile, adiponitrile, pimelic dinitrile, hexamethylene dicyanide, azelaic dinitrile and sebacic dinitrile.
